# EUROPEAN PATENT SPECIFICATION

(11) **EP 4 299 381 B1**
(45) Date of publication and mention of the grant of the patent: **08.04.2026**
(21) Application number: 21927166.5
(22) Date of filing: 24.02.2021
(51) Int. Cl.: B60R 9/058

(54) **CONNECTING ASSEMBLY AND CAR EQUIPPED WITH SAME**
VERBINDUNGSANORDNUNG UND DAMIT AUSGESTATTETES FAHRZEUG
ENSEMBLE DE RACCORDEMENT ET VOITURE ÉQUIPÉE DE CELUI-CI

(43) Date of publication of application: 03.01.2024
(73) Proprietor: Zhejiang Smart Intelligence Technology Co., Ltd., Ningbo, Zhejiang 315336 (CN)
(72) Inventor: LU, Tao, Hangzhou Bay New District Ningbo, Zhejiang 315336 (CN); SONG, Yongle, Hangzhou Bay New District Ningbo, Zhejiang 315336 (CN); FU, Qiang, Hangzhou Bay New District Ningbo, Zhejiang 315336 (CN); CHENG, Haiye, Hangzhou Bay New District Ningbo, Zhejiang 315336 (CN); YANG, Jun, Hangzhou Bay New District Ningbo, Zhejiang 315336 (CN)
(74) Representative: Zaboliene, Reda
(86) International application number: PCT/CN2021/077718
(87) International publication number: WO 2022/178722

(56) References cited:
- CN-A- 112 572 302
- CN-U- 204 264 041
- DE-A1- 102008 064 346
- DE-A1- 19 947 762
- US-A- 4 723 696
- US-A1- 2006 157 524
- US-A1- 2019 061 635
- US-B1- 10 189 417

## Description

### TECHNICAL FIELD

The present invention relates to the technical field of car roof luggage racks, and in particular, to a connecting assembly and a car equipped with the connecting assembly.

### BACKGROUND

With continuous increasing usage of cars in contemporary society, and self-driving travels have also become widespread. As ranges of activities increase, more and more items are carried, but interior space of a car is limited, it is only possible to increase carrying space of the car by other methods, such as mounting a car roof luggage rack on a car roof. At present, some cars on the market have mounting points for car roof luggage racks reserved on car roofs, and people can choose to mount car roof luggage racks according to their own preferences. However, when mounting a car roof luggage rack, a connection manner between a car and the car roof luggage rack is usually connection through fasteners, such as screws, bolts, etc. The assembly process is not only complicated, but also involves significant modifications to a car roof structure, which is highly possible to damage the car roof structure during the assembly process.

In view of this, it is necessary to provide a technical solution of a luggage rack mounting assembly with a convenient assembly process and less modifications for a car roof structure.

In a reference document US4723696A, in a roof rack fastening arrangement for motor vehicle bodies, having a longitudinal flat roof gutter which forms a covered drip molding and is covered by a decorative strip towards the outside and in which bracket shaped holding plates for the supporting feet of a roof rack are secured at specific positions, bracket shaped holding plates are provided on both sides of their central raised bracket portion with supporting flanges which are raised on one longitudinal side and on which the supporting feet of a roof rack rest and on the supporting feet Z-shaped clamping fittings are supported which can be tensioned by way of fastening screws and which are supported below their fastening screw on the supporting feet in such a way that they engage with their holding flanges under the raised bracket portion from the inside and by tightening the fastening screw they tension the supporting feet downwardly and outwardly.

### SUMMARY OF THE DISCLOSURE

### Technical problem

When mounting a car roof luggage rack, a connection manner between a car and the car roof luggage rack is usually connection through fasteners, such as screws, bolts, etc. The assembly process is not only complicated, but also involves significant modifications to a car roof structure, which is highly possible to damage the car roof structure during the assembly process.

### Technical solution

The present invention provides a connection assembly and a car equipped with the connection assembly, of which the purpose is to simplify an assembly process of a car roof luggage rack and reduce modifications of the assembly process to a car roof structure.

The present invention adopts the following technical solutions.

A connecting assembly is configured to mount a car roof luggage rack on a side panel of a car roof structure. The connecting assembly comprises a luggage rack fixing support, a first connecting member and a second connecting member; wherein the luggage rack fixing support is mounted on the side panel, and an insertion slot is formed between the luggage rack fixing support and the side panel; the first connecting member comprises a first transverse portion and a first vertical portion extending upward from a side of the first transverse portion, a side of the first vertical portion facing away from the first transverse portion is provided with a first engaging portion, and the first transverse portion is engaged in the insertion slot; the second connecting member is mounted on the side panel and comprises a second vertical portion extending vertically, and the second vertical portion is provided with a second engaging portion; the first engaging portion is engaged with the second engaging portion, such that the first connecting member is mounted between the second connecting member and the luggage rack fixing support; and when the first engaging portion is engaged with the second engaging portion, the first vertical portion abuts against the second vertical portion.

Furthermore, one of the first engaging portion and the second engaging portion is configured to be an engaging slot, and the other of the first engaging portion and the second engaging portion is configured to be an engaging key.

Furthermore, the first engaging portion is configured to be an engaging slot, the engaging slot is bent and extends upwards; the second engaging portion is configured to be an engaging key, and a shape of the engaging key matches with a shape of the engaging slot.

Furthermore, two ends of the engaging slot respectively run through two sides in a width direction of the first vertical portion or of the second vertical portion.

Furthermore, the second engaging portion is located at a lower part of the second vertical portion.

Furthermore, the second connecting member comprises a second transverse portion extending transversely from an upper side edge of the second vertical portion.

Furthermore, an included angle between the first transverse portion and the first vertical portion is greater than 90 degrees.

Furthermore, the luggage rack fixing support is of U-shaped and comprises two end portions connected to the side panel and a middle portion being adjacent to the two end portions, there is a gap between the middle portion and the side panel, and the gap forms the insertion slot.

A car equipped with the above connecting assembly comprises a car roof structure, the car roof structure comprises a side panel, the side panel comprises a first surface extending transversely and a second surface extending upwards from a side edge of the first side surface, the luggage rack fixing support is mounted on the first surface, and the second vertical portion abuts against the second surface.

### Advantageous effect

When the connecting assembly is mounted, the first connecting member is restricted on the side panel through the second connecting member and the luggage rack fixing support; the insertion slot limits movements in frontward and backward directions and in upward and downward directions of the first transverse portion, and thereby limits movements in frontward and backward directions and in an upward direction of the first connecting member; the second engaging portion of the second connecting member limits movement in a downward direction of the first connecting member, the second connecting member and the insertion slot limit movements in leftward and rightward directions of the first connecting member, and thus the first connecting member is mounted between the second connecting member and the luggage rack fixing support; a car roof luggage rack is mounted on a car roof through the first connecting member. The mounting process of the first connecting member of the present application is simple and quick, and there is no need for fasteners to secure, modifications to a car roof structure is reduced.

### BRIEF DESCRIPTION OF THE DRAWINGS

FIG. 1 is a schematic view from one view angle of a combination structure of a side panel, a connecting assembly, and a luggage rack fixing support in the present invention.
FIG. 2 is a schematic view from one view angle of a combination structure of a side panel, a connecting assembly, and a luggage rack fixing support in the present invention.

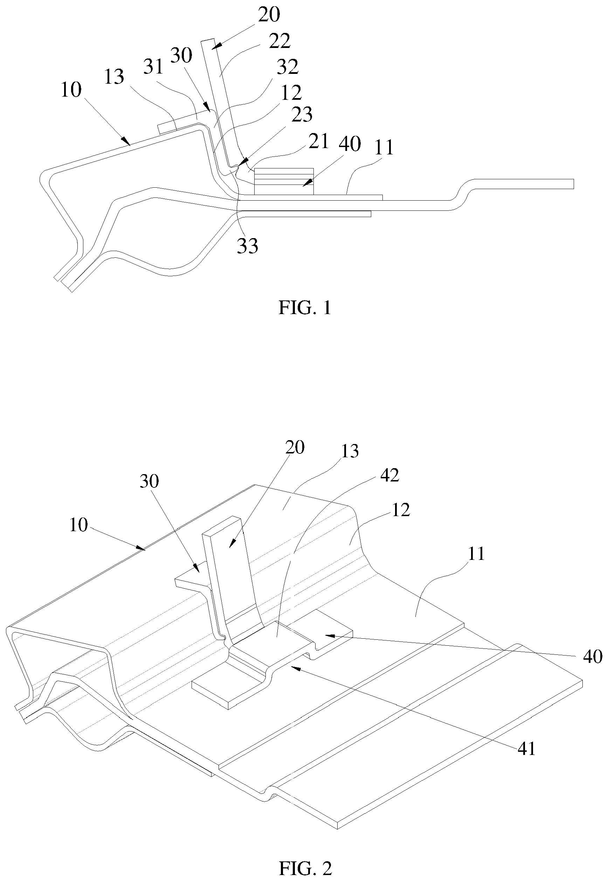

FIG. 2 is a schematic view from one view angle of a combination structure of a side panel, a connecting assembly, and a luggage rack fixing support in the present invention.

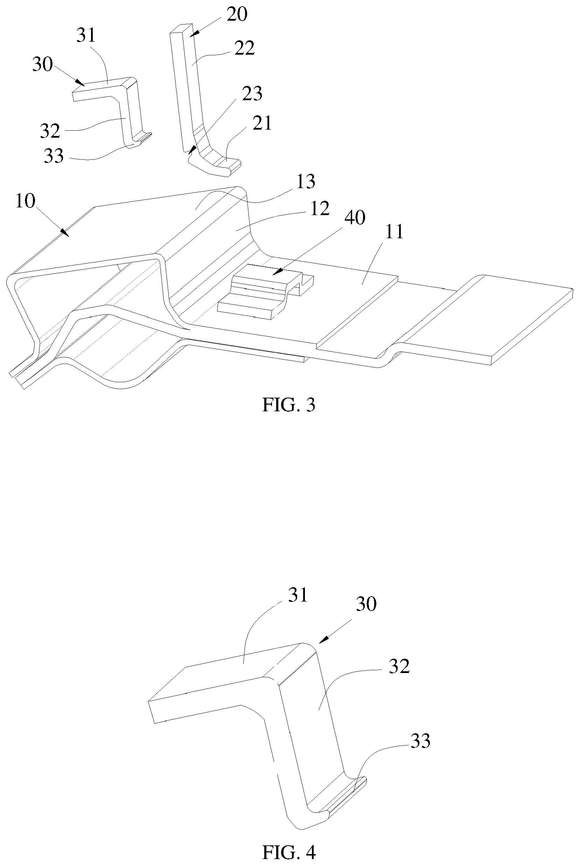

FIG. 4 is a structural schematic view of a second connecting member of the present invention.

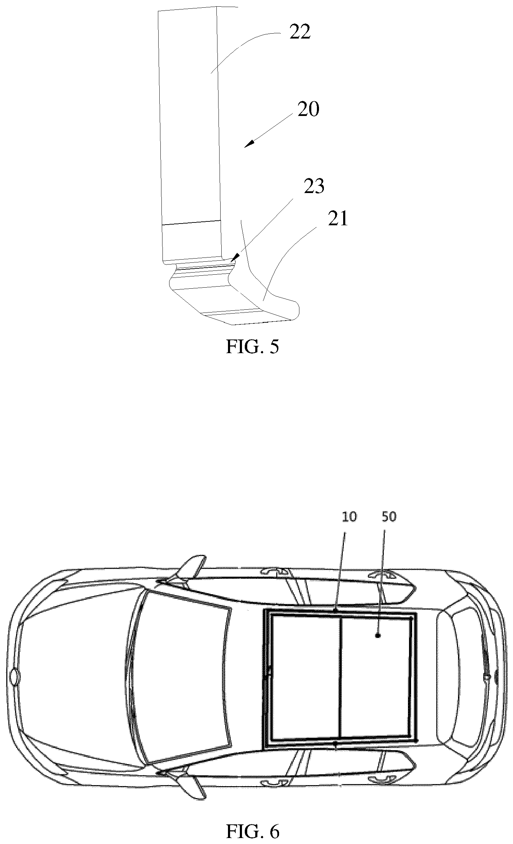

FIG. 5 is a structural schematic view of a first connecting member of the present invention.
FIG. 6 is a structural schematic view of a car roof of a car of the present invention.

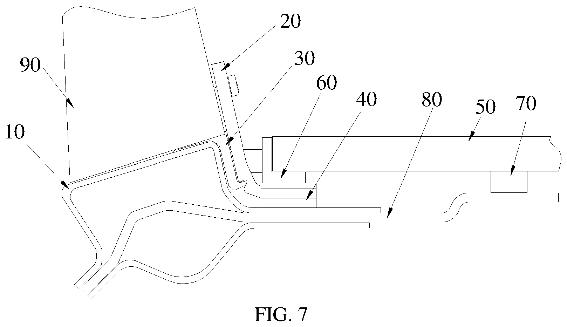

FIG. 7 is a structural schematic view of a combination of a car roof structure, a connecting assembly, a car roof luggage rack, a glass adhesive strip, and canopy glass of the present invention.

Description of reference numbers of drawings: 10-side panel; 11-first surface; 12-second surface; 13-third surface; 20-first connecting member; 21-first transverse portion; 22-first vertical portion; 23-first engaging portion; 30-second connecting member; 31-second transverse portion; 32-second vertical portion; 33-second engaging portion; 40-luggage rack fixing support; 41-middle portion; 42-insertion slot; 50-canopy glass; 60-glass adhesive strip; 70-glass glue; 80-side interior plate; 90-car roof luggage rack.

### DETAILED DESCRIPTION

The specific embodiments of the present invention will be described in detail below in combination with the drawings. It should be understood that the specific embodiments described herein are merely used to illustrate and explain the present invention, but not to limit the present invention.

The present application discloses a car and a connecting assembly, the car includes a car roof, and the connecting assembly is configured to mount a car roof luggage rack 90 (referring to FIG. 7) on the car roof.

Referring to FIG. 1-FIG. 3, the car roof includes a side panel 10. The side panel 10 is arranged to extend along a length direction of the car, and a length direction of the side panel 10 is the same as the length direction of the car. The side panel 10 includes a first surface 11 extending transversely and a second surface 12 extending upwards from a side edge of the first side surface 11, wherein the transverse direction described in this embodiment is the same as a width direction of the car. The connecting assembly includes a first connecting member 20, a second connecting member 30, and a luggage rack fixing support 40 arranged on the side panel 10. The luggage rack fixing support 40 is mounted on the side panel 10 and arranged to extend along a length direction of the side panel 10, and an insertion slot 42 is formed between the luggage rack fixing support 40 and the side panel 10; preferably, the luggage rack fixing support 40 is mounted on the first surface 11. The first connecting member 20 includes a first transverse portion 21 and a first vertical portion 22 extending upward from a side of the first transverse portion 21, a side of the first vertical portion 22 facing away from the first transverse portion 21 is provided with a first engaging portion 23, and the first transverse portion 21 is engaged in the insertion slot 42; the second connecting member 30 is mounted on the side panel 10 and includes a second vertical portion 32 extending vertically, the second vertical portion 32 abuts against the second surface 12 of the side panel 10; the second vertical portion 32 is provided with a second engaging portion 33, the first engaging portion 23 is engaged with the second engaging portion 33; when the first transverse portion 21 is engaged in the insertion slot 42 and the first engaging portion 23 is engaged with the second engaging portion 33, a bottom side surface of the first transverse portion 21 is distanced from the side panel 10, and the first vertical portion 21 abuts against the second vertical portion 32, such that the first connecting member 20 is mounted between the second connecting member 30 and the luggage rack fixing support 40. By engaging restriction between the first engaging portion 23 and the second engaging portion 33, restriction of the second vertical portion 32 to the first vertical portion 21, and restriction action of the insertion slot 42 to the first transverse portion 21, the first connecting member 20 is limited between the second connecting member 30 and the luggage rack fixing support 40. Among them, the reference document US4723696A may disclose or teach a connecting assembly configured to mount a car roof luggage rack on a side panel of a car roof structure, wherein the connecting assembly comprises: a luggage rack fixing support, wherein the luggage rack fixing support is configured to be mounted on the side panel, and cooperate with the side panel to form an insertion slot; and a first connecting member, wherein the first connecting member comprises a first transverse portion and a first vertical portion extending upward from a side of the first transverse portion, a side of the first vertical portion facing away from the first transverse portion is provided with a first engaging portion, and the first transverse portion is engaged in the insertion slot. However, the reference document fails to disclose or teach features about the second connecting member 30.

When the connecting assembly is mounted on a car roof structure, the insertion slot 42 limits movements in frontward and backward directions and in upward and downward directions of the first transverse portion 21 and thereby limits movements in frontward and backward directions and in an upward direction of the first connecting member 20, the second engaging portion 33 of the second connecting member 30 limits movement in a downward direction of the first connecting member 20, the second connecting member 30 and the insertion slot 42 limit movements in leftward and rightward directions of the first connecting member 20, so that the first connecting member 20 is mounted on the side panel 10, and frontward and backward, leftward and rightward, and upward and downward directions of the first connecting member 20 are all limited. The car roof luggage rack 90 is mounted on the car roof structure through the first connecting member 20, a bottom of the car roof luggage rack 90 abuts against an outside of the side panel 11, and the main weight of the car roof luggage rack 90 is born by the side panel 11. The first connecting member 20 provides a limit function for the car roof luggage rack 90 to prevent the car roof luggage rack 90 from generating position deviation on the side panel 11. When the car roof luggage rack 90 generates a tendency to move outwards, the car roof luggage rack 90 exerts an outward pulling force on the first connecting member 20; according to the lever principle, the first transverse portion 21 of the first connecting member 20 tends to tilt upwards, and a middle part 41 of the luggage rack fixing support 40 can restrict the first transverse portion 21 from tilting upwards, and the second vertical portion 32 limits the first vertical portion 21 to prevent the first connecting member 20 from moving outwards. When the car roof luggage rack 90 generates a tendency to move inwards, the car roof luggage rack 90 exerts an inward pushing force on the first connecting member 20; the second engaging portion 33 of the second connecting member 30 can limit inward movement of the first connecting member 20 through the first engaging portion 23, and a lateral side wall of the insertion slot 42 restricts movement of the first transverse portion 21 in forward and backward directions. In summary, the first connecting member 20 can be relatively firmly restricted on the car roof structure and will not drop from the car roof structure, such that the car roof luggage rack 90 can also be firmly restricted on the car roof structure. In addition, the mounting process of the first connecting member 20 of the present application is simple and quick, and there is no need for fasteners to secure, modifications to a car roof structure is reduced.

The structure of the luggage rack fixing support 40 is further described. The luggage rack fixing support 40 is of U-shaped, and the luggage rack fixing support 40 includes two end portions connected to the first surface 11 of the side panel 10 and a middle portion 41 being adjacent to the two end portions and forming the insertion slot 42 with the first surface 11. Among them, the two end portions of the luggage rack fixing support 40 can be fixed by welding to the first surface 11, the middle portion 41 of the luggage rack fixing support 40 in a length direction protrudes upwards, such that there is a gap defined between the middle portion 41 and the first surface 11 of the side panel 10, and the gap forms the insertion slot 42. This embodiment only provides one of possible structures of the luggage rack fixing support 40, and the luggage rack fixing support 40 can also be in other structural manners, as long as a gap is formed between the middle portion 41 of the luggage rack fixing support 40 and the first surface 11 of the side panel 10.

In combination with FIG. 3-FIG. 4, structures and mounting manners of the side panel 10 and the second connecting member 30 in this embodiment are further detailed below. The side panel 10 further includes a third surface 13 extending obliquely downwards from an upper edge of the second surface 12 and along a direction being away from the first surface 11; an included angle between an upper side of the second surface 12 and the first surface 11 is greater than 90 degrees, preferably, the angle is 90-120 degrees; a lower side of the second surface 12 extends obliquely towards the first surface 11, such an arrangement is intended to reduce stress concentration phenomenon at a joint between the first surface 11 and the second surface 12. In order to make the second connecting member 30 be arranged on the side panel 10, in this embodiment, the second connecting member 30 further includes a second transverse portion 31 extending transversely from an upper side edge of the second vertical portion 32; when the second connecting member 30 is mounted on the side panel 10, the second vertical portion 32 abuts against an upper side of the second surface 12, and an included angle between the second vertical portion 32 and the first surface 11 is the same as an included angle between the upper side of the second surface 12 and the first surface 11; the second transverse portion 31 abuts against the third surface 13, the second connecting member 30 is supported by the third surface 13 and the second surface 12, such that the second connecting member 30 is arranged on the side panel 10, and the second engaging portion 33 is arranged at a side of the second vertical portion 32 facing away from the second transverse portion 31 and located at a lower part of the second vertical portion 32. In other embodiments, the second connecting member 30 can also be arranged on the side panel 10 in other ways, such as through buckle connection, adhesive bonding, or other methods, as long as the second connecting member 30 is enabled to be arranged on the side panel 10.

In combination with FIG. 3 and FIG. 5, the structure of the first connecting member 20 in this embodiment is further detailed. There is arc-shaped transition between the first vertical portion 22 and the first transvese portion 21, such that stress concentration phenomenon between the first vertical portion 22 and the first transvese portion 21 can be reduced. An included angle between the first vertical portion 22 and the first transverse portion 21 is greater than 90 degrees, preferably, an included angle between the first vertical portion 22 and the first transverse portion 21 is the same as the included angle between the first surface 11 and the upper side of the second surface 12. In this way, it is possible to make the shape of the first connecting member 20 be suitable for the shape of the joint between the first surface 11 and the second surface 12, and when the first connecting member 20 is connected to the second connecting member 30, the first vertical portion 22 obliquely abuts against the second vertical portion 32 of the second connecting member 30; preferably, the first vertical portion 22 fits the second vertical portion 32. In this embodiment, the first engaging portion 23 is configured to be an engaging slot, two ends of the engaging slot respectively run through two sides in a width direction of the first vertical portion 22; the second engaging portion 33 is configured to be an engaging key, the engaging key is bent upwards, and the engaging slot is also bent and extends upwards; a shape of the engaging slot matches with a shape of the engaging key. In assembly, the first transverse portion 21 of the first connecting member 30 is first inserted into the insertion slot 42, and the second connecting member 30 is arranged on the side panel 10; then the second connecting member 30 is slid along a length direction of the side panel 10, the second connecting member 30 is moved to a position corresponding to the first connecting member 20, so that the engaging key is moved into the engaging slot from an end of the engaging slot, and the engaging key is engaged in the engaging slot; when the engaging key is engaged in the engaging slot, a side wall of a distal end of the engaging key abuts against a side wall of the engaging slot, so as to prevent the engaging key from shaking in the engaging slot. When the first transverse portion 21 is inserted in the insertion slot 42, a bottom side surface of the first transverse portion 21 is distanced from the first surface 11. In other embodiments (not shown in the drawings), the first engaging portion 23 can be configured to be an engaging key, and the second engaging portion 33 is configured to be an engaging slot, two ends of the engaging slot respectively run through two sides in a width direction of the second vertical portion 22.

Referring to FIG. 6-FIG. 7, this embodiment further discloses a car with a skylight, which includes the above car roof structure, and the car roof structure includes canopy glass 50 and glass adhesive strips 60. In this embodiment, the car roof structure includes two side panels 10, the two side panels 10 are symmetrically arranged at two opposite sides of a width direction of a top of the car, each side panel 10 is provided with one of the glass adhesive strips 60, a side edge of each glass adhesive strip 60 facing the second surface 12 is connected to the second surface 12, and the glass adhesive strips 60 are located above the luggage rack fixing support 40. A bottom side surface of the canopy glass 50 abuts against the glass adhesive strip 60, specifically, a side of each glass adhesive strip 60 facing away from the second surface 12 is provided with an L-shaped mounting position, side edges of the canopy glass 50 match with the L-shaped mounting positions, a lower part of the first connecting member 20 and a lower part of the second connecting member 30 are inserted between the glass adhesive strips 60 and the second surface 12 to enter underside of the canopy glass 50. The car roof further includes a side interior plate 80, a side of the side interior plate 80 sinks, a bottom surface of the side panel 10 is connected to the sunk side of the side interior plate 80, the position of the first surface 11 is in correspondence with the position of the sunk side of the side interior plate 80, and the canopy glass 50 is adhered to another side of the side interior plate 80 through glass glue 70.

## Claims

1. A connecting assembly configured to mount a car roof luggage rack (90) on a side panel (10) of a car roof structure, wherein the connecting assembly comprises:
a luggage rack fixing support (40), wherein the luggage rack fixing support (40) is mounted on the side panel (10), and an insertion slot (42) is formed between the luggage rack fixing support and the side panel (10); and
a first connecting member (20), wherein the first connecting member (20) comprises a first transverse portion (21) and a first vertical portion (22) extending upward from a side of the first transverse portion (21), a side of the first vertical portion (22) facing away from the first transverse portion (21) is provided with a first engaging portion (23), and the first transverse portion (23) is engaged in the insertion slot (42);
the connecting assembly is **characterized by** further comprising a second connecting member (30), wherein the second connecting member (30) is mounted on the side panel (10) and comprises a second vertical portion (32) extending vertically, and the second vertical portion (32) is provided with a second engaging portion (33); the first engaging portion (23) is engaged with the second engaging portion (33), such that the first connecting member (20) is mounted between the second connecting member (30) and the luggage rack fixing support (40); and when the first engaging portion (20) is engaged with the second engaging portion (30), the first vertical portion (22) abuts against the second vertical portion (32).

2. The connecting assembly according to claim 1, wherein one of the first engaging portion (23) and the second engaging portion (33) is configured to be an engaging slot, and the other of the first engaging portion (23) and the second engaging portion (33) is configured to be an engaging key.

3. The connecting assembly according to claim 2, wherein the first engaging portion (23) is configured to be an engaging slot, the engaging slot is bent and extends upwards; the second engaging portion (33) is configured to be an engaging key, and a shape of the engaging key matches with a shape of the engaging slot.

4. The connecting assembly according to claim 2, wherein two ends of the engaging slot respectively run through two sides in a width direction of the first vertical portion (22) or of the second vertical portion (32).

5. The connecting assembly according to claim 1, wherein the second engaging portion (33) is located at a lower part of the second vertical portion (32).

6. The connecting assembly according to claim 1, wherein the second connecting member (30) further comprises a second transverse portion (31) extending transversely from an upper side edge of the second vertical portion (32).

7. The connecting assembly according to claim 1, wherein an included angle between the first transverse portion (21) and the first vertical portion (22) is greater than 90 degrees.

8. The connecting assembly according to claim 1, wherein the luggage rack fixing support (40) is of U-shaped and comprises two end portions connected to the side panel (10) and a middle portion (41) being adjacent to the two end portions, there is a gap between the middle portion (41) and the side panel (10), and the gap forms the insertion slot (42).

9. A car equipped with the connecting assembly according to any one of claims 1-8 comprising a car roof structure, wherein the car roof structure comprises a side panel (10), the side panel (10) comprises a first surface (11) extending transversely and a second surface (12) extending upwards from a side edge of the first side surface (11), the luggage rack fixing support (40) is mounted on the first surface (11), and the second vertical portion (32) abuts against the second surface (12).

## Patentansprüche

1. Verbindungsanordnung, die zum Montieren eines Dachgepäckträgers (90) an einem Seitenblech (10) einer Dachstruktur eines Fahrzeugs eingerichtet ist, wobei die Verbindungsanordnung Folgendes umfasst:
eine Gepäckträger-Befestigungsstütze (40), wobei die Gepäckträger-Befestigungsstütze (40) an dem Seitenblech (10) montiert ist und ein Einschubschlitz (42) zwischen der Gepäckträger-Befestigungsstütze und dem Seitenblech (10) ausgebildet ist; und
ein erstes Verbindungselement (20), wobei das erste Verbindungselement (20) einen ersten Querabschnitt (21) und einen ersten Vertikalabschnitt (22) umfasst, der sich von einer Seite des ersten Querabschnitts (21) aufwärts erstreckt, wobei eine von dem ersten Querabschnitt (21) abgewandte Seite des ersten Vertikalabschnitts (22) mit einem ersten Eingriffsabschnitt (23) versehen ist und der erste Querabschnitt (23) in den Einschubschlitz (42) eingreift;
wobei die Verbindungsanordnung **dadurch gekennzeichnet ist, dass** die Verbindungsanordnung ferner ein zweites Verbindungselement (30) umfasst, wobei das zweite Verbindungselement (30) an dem Seitenblech (10) montiert ist und einen sich vertikal erstreckenden zweiten Vertikalabschnitt (32) umfasst, wobei der zweite Vertikalabschnitt (32) mit einem zweiten Eingriffsabschnitt (33) versehen ist, wobei der erste Eingriffsabschnitt (23) mit dem zweiten Eingriffsabschnitt (33) in Eingriff steht, sodass das erste Verbindungselement (20) zwischen dem zweiten Verbindungselement (30) und der Gepäckträger-Befestigungsstütze (40) montiert ist, und wobei wenn der erste Eingriffsabschnitt (23) mit dem zweiten Eingriffsabschnitt (33) in Eingriff steht, der erste Vertikalabschnitt (22) an dem zweiten Vertikalabschnitt (32) anliegt.

2. Verbindungsanordnung nach Anspruch 1, wobei einer von dem ersten Eingriffsabschnitt (23) und dem zweiten Eingriffsabschnitt (33) als ein Einschubschlitz und der andere von dem ersten Eingriffsabschnitt (23) und dem zweiten Eingriffsabschnitt (33) als eine Eingriffsfeder eingerichtet ist.

3. Verbindungsanordnung nach Anspruch 2, wobei der erste Eingriffsabschnitt (23) als ein Einschubschlitz eingerichtet ist, wobei der Einschubschlitz gebogen ist und sich aufwärts erstreckt, wobei der zweite Eingriffsabschnitt (33) als eine Eingriffsfeder eingerichtet ist, und wobei eine Form der Eingriffsfeder mit einer Form des Einschubschlitzes übereinstimmt.

4. Verbindungsanordnung nach Anspruch 2, wobei zwei Enden des Einschubschlitzes jeweils zwei Seiten in Breitenrichtung des ersten Vertikalabschnitts (22) oder des zweiten Vertikalabschnitts (32) durchdringen.

5. Verbindungsanordnung nach Anspruch 1, wobei der zweite Eingriffsabschnitt (33) im unteren Bereich des zweiten Vertikalabschnitts (32) angeordnet ist.

6. Verbindungsanordnung nach Anspruch 1, wobei das zweite Verbindungselement (30) ferner einen zweiten Querabschnitt (31) umfasst, der sich von einer oberen Seitenkante des zweiten Vertikalabschnitts (32) quer erstreckt.

7. Verbindungsanordnung nach Anspruch 1, wobei ein eingeschlossener Winkel zwischen dem ersten Querabschnitt (21) und dem ersten Vertikalabschnitt (22) größer als 90 Grad ist.

8. Verbindungsanordnung nach Anspruch 1, wobei die Gepäckträger-Befestigungsstütze (40) U-förmig ausgebildet ist und zwei mit dem Seitenblech (10) verbundene Endabschnitte sowie einen Mittelabschnitt (41) umfasst, der an den beiden Endabschnitten anliegt, wobei zwischen dem Mittelabschnitt (41) und dem Seitenblech (10) ein Spalt besteht, der den Einschubschlitz (42) bildet.

9. Fahrzeug mit der Verbindungsanordnung nach einem der Ansprüche 1 bis 8, umfassend eine Dachstruktur eines Fahrzeugs, wobei die Dachstruktur ein Seitenblech (10) umfasst, wobei das Seitenblech (10) eine sich quer erstreckende erste Fläche (11) und eine sich von einer Seitenkante der ersten Seitenfläche (11) aufwärts erstreckende zweite Fläche (12) umfasst, wobei die Gepäckträger-Befestigungsstütze (40) an der ersten Fläche (11) montiert ist und der zweite Vertikalabschnitt (32) an der zweiten Fläche (12) anliegt.

## Revendications

1. Ensemble de liaison conçu pour monter un porte-bagages de toit de voiture (90) sur un panneau latéral (10) d'une structure de toit de voiture, dans lequel l'ensemble de liaison comprend :
un support de fixation de porte-bagages (40), dans lequel le support de fixation de porte-bagages (40) est monté sur le panneau latéral (10), et une fente d'insertion (42) est formée entre le support de fixation de porte-bagages et le panneau latéral (10) ; et
un premier élément de liaison (20), dans lequel le premier élément de liaison (20) comprend une première partie transversale (21) et une première partie verticale (22) s'étendant vers le haut à partir d'un côté de la première partie transversale (21), un côté de la première partie verticale (22) opposé à la première partie transversale (21) est pourvu d'une première partie de prise (23), et la première partie transversale (23) vient en prise avec la fente d'insertion (42) ;
l'ensemble de liaison est **caractérisé par le fait qu'**il comprend en outre un second élément de liaison (30), dans lequel le second élément de liaison (30) est monté sur le panneau latéral (10) et comprend une seconde partie verticale (32) s'étendant verticalement, et la seconde partie verticale (32) est pourvue d'une seconde partie de prise (33) ; la première partie de prise (23) vient en prise avec la seconde partie de prise (33), de sorte que le premier élément de liaison (20) soit monté entre le second élément de liaison (30) et le support de fixation de porte-bagages (40) ; et lorsque la première partie de prise (20) vient en prise avec la seconde partie de prise (33), la première partie verticale (22) vient en butée contre la seconde partie verticale (32).

2. Ensemble de liaison selon la revendication 1, dans lequel l'une de la première partie de prise (23) et de la seconde partie de prise (33) est conçue pour être une fente de prise, et l'autre de la première partie de prise (23) et de la seconde partie de prise (33) est conçue pour être une clé de prise.

3. Ensemble de liaison selon la revendication 2, dans lequel la première partie de prise (23) est conçue pour être une fente de prise, la fente de prise est courbée et s'étend vers le haut ; la seconde partie de prise (33) est conçue pour être une clé de prise, et une forme de la clé de prise correspond à une forme de la fente de prise.

4. Ensemble de liaison selon la revendication 2, dans lequel deux extrémités de la fente de prise passent respectivement à travers deux côtés dans une direction de la largeur de la première partie verticale (22) ou de la seconde partie verticale (32).

5. Ensemble de liaison selon la revendication 1, dans lequel la seconde partie de prise (33) est située au niveau d'une partie inférieure de la seconde partie verticale (32).

6. Ensemble de liaison selon la revendication 1, dans lequel le second élément de liaison (30) comprend en outre une seconde partie transversale (31) s'étendant transversalement à partir d'un bord supérieur de la seconde partie verticale (32).

7. Ensemble de liaison selon la revendication 1, dans lequel un angle inclus entre la première partie transversale (21) et la première partie verticale (22) est supérieur à 90 degrés.

8. Ensemble de liaison selon la revendication 1, dans lequel le support de fixation de porte-bagages (40) est en forme de U et comprend deux parties d'extrémité reliées au panneau latéral (10) et une partie centrale (41) qui est adjacente aux deux parties d'extrémité, il y a un espace entre la partie centrale (41) et le panneau latéral (10), et l'espace forme la fente d'insertion (42).

9. Voiture équipée de l'ensemble de liaison selon l'une quelconque des revendications 1 à 8, comprenant une structure de toit de voiture, dans laquelle la structure de toit de voiture comprend un panneau latéral (10), le panneau latéral (10) comprend une première surface (11) s'étendant transversalement et une seconde surface (12) s'étendant vers le haut à partir d'un bord latéral de la première surface latérale (11), le support de fixation de porte-bagages (40) est monté sur la première surface (11), et la seconde partie verticale (32) vient en butée contre la seconde surface (12).
